(19) Europäisches Patentamt / European Patent Office / Office européen des brevets

(11) **EP 2 487 644 A2**

(12) **EUROPEAN PATENT APPLICATION**

(43) Date of publication:
**15.08.2012 Bulletin 2012/33**

(51) Int Cl.:
***G06T 3/40*** *(2006.01)*    ***G06F 17/30*** *(2006.01)*

(21) Application number: **12159318.0**

(22) Date of filing: **27.04.2005**

(84) Designated Contracting States:
**AT BE BG CH CY CZ DE DK EE ES FI FR GB GR HU IE IS IT LI LT LU MC NL PL PT RO SE SI SK TR**

(30) Priority: **30.04.2004 JP 2004135800**
**30.04.2004 JP 2004135801**

(62) Document number(s) of the earlier application(s) in accordance with Art. 76 EPC:
**05736498.6 / 1 752 880**

(71) Applicant: **ACCESS CO., LTD.**
**Tokyo 101-0064 (JP)**

(72) Inventors:
• **Funakami, Raiko**
**Chiyoda-Ku, Tokyo 1010064 (JP)**

• **Shtykh, Roman**
**Chiyoda-Ku, Tokyo 1010064 (JP)**
• **Abe, Yohei**
**Chiyoda-Ku, Tokyo 1010064 (JP)**
• **Kamada, Tomihisa**
**Chiyoda-Ku, Tokyo 1010064 (JP)**

(74) Representative: **Ablett, Graham Keith et al**
**Ablett & Stebbing**
**Caparo House**
**101-103 Baker Street**
**London, W1U 6FQ (GB)**

Remarks:
This application was filed on 13-03-2012 as a divisional application to the application mentioned under INID code 62.

(54) **Method for dynamic image enlarging/reducing display in browsing, terminal device, and program**

(57) A displaying method and a browser program for displaying content on a terminal device wherein the displaying method comprises the steps of judging whether an object in the content displayed on a display screen of the terminal device is in a state partially displayed within the display screen or not; and displaying the whole of the object while overlaying it on the currently displayed content when the object is in the state partially displayed within the display screen.

FIG.11

EP 2 487 644 A2

**Description**

**TECHNICAL FIELD**

The present invention relates to the display of information by a browser, and in particular, to a function of dynamically enlarging/reducing an object such as an image during the browsing.

**BACKGROUND OF THE INVENTION**

Against the background of the increasing use of the Internet, the browsing of Web pages (hereinafter referred to as "pages") on the Internet is widely done in recent years also on mobile terminal devices such as cellular phones and PDAs. However, content on the Internet is created generally for PCs (Personal Computers) having relatively large display screens, and thus a browser operating on a mobile terminal device having a relatively small display screen is required to be configured not to deteriorate the visibility of pages in such a restricted device environment.

A technique displaying a floating image of an enlarged image while overlaying it on the original image has been described in U.S. Pat. No. 6,590,583B2. Such an image enlargement technique is one of techniques serving for enhancing the visibility for the user during the page display.

**DISCLOSURE OF THE INVENTION**

A method for increasing the visibility for the user during the page browsing on a mobile terminal device having a relatively small display screen compared to PCs is to execute a process for reducing objects such as images and giving line feeds to text so that a page fits in the width of the display screen, that is, so that the horizontal scrolling is unnecessary. However, when such a process is executed by the browser, objects such as icons and image maps can be reduced too much to be hard to view.

It is possible to avoid the above problem by automatically enlarging every object that is currently focused on in the page. When the terminal device is a cellular phone, for example, every object that is focused on by the user by operating a directional key is displayed in the enlarged display. However, such an automatic image enlargement process causes a new problem of increasing the processing load on the device.

The present invention has been made in consideration of the above problems. It is therefore the primary object of the present invention to provide a displaying method, a terminal device and a program capable of enhancing the visibility for the user during the page browsing on a terminal device having a relatively small display screen while preventing an increase in the processing load.

In order to achieve the above object, in accordance with an aspect of the present invention, there is provided a displaying method for displaying content, created for a first terminal device having a first display screen size, on a second terminal device having display means with a display width smaller than that of the first display screen, comprising the steps of: judging whether an object in the content displayed on the display means of the second terminal device has been reduced or not; and enlarging and displaying the object when the object is judged to have been reduced.

With the above configuration, it is possible to selectively make the enlarged display of only an object that is focused on in the content and that has been reduced, by which the visibility (i.e. convenience for the user) in the content browsing on a terminal device can be enhanced while preventing an unnecessary increase in the processing load.

The enlargement of the obj ect may be executed based on the display width of the second terminal device. Or the enlargement of the object may be executed so that width of the object after the enlargement equals the display width of the display means.

The displaying method may be controlled so as to move an operation target position in the content displayed on the display means according to a user operation and automatically execute the enlargement of an obj ect in the content when the operation target position has moved to the object due to the user operation.

The displaying method may further comprise the steps of: moving an operation target position in the content displayed on the display means according to a user operation; and letting a user select whether the enlargement should be executed for an obj ect in the content or not when the operation target position has moved to the object due to the user operation.

In order to achieve the above object, in accordance with another aspect of the present invention, there is provided a displaying method for displaying content, created for a first terminal device having a first display screen size, on a second terminal device having display means with a display width smaller than that of the first display screen, comprising the steps of: judging whether an object in the content displayed on the display means of the second terminal device is in a state not fitted in the display width of the display means or not; and reducing and displaying the object when the object is judged not to have fitted in the display width.

With the above configuration, it is possible to selectively make the reduced display of only an object that is focused on in the content and that has not fitted in the display width, by which the visibility (i.e. convenience for the user) in the content browsing on a terminal device can be enhanced while preventing an unnecessary increase in the processing load.

The reduction of the object may be executed based on the display width of the second terminal device. Or the reduction of the object may be executed so that width of the object after the reduction equals the display width of the display means.

The displaying method may be controlled so as to move an operation target position in the content displayed on the display means according to a user operation and automatically execute the reduction of an object in the content when the operation target position has moved to the object due to the user operation.

The displaying method may further comprise the steps of: moving an operation target position in the content displayed on the display means according to a user operation; and letting a user select whether the reduction should be executed for an object in the content or not when the operation target position has moved to the object due to the user operation.

In order to achieve the above object, in accordance with another aspect of the present invention, there is provided a displaying method for displaying content, created for a first terminal device having a first display screen size, on a second terminal device having display means with a display width smaller than that of the first display screen, comprising the steps of: judging whether an object in the content displayed on the display means of the second terminal device has been reduced or not and enlarging and displaying the object when the object is judged to have been reduced; and judging whether an object in the content displayed on the display means of the second terminal device is in a state not fitted in the display width of the display means or not and reducing and displaying the object when the object is judged not to have fitted in the display width.

With the above configuration, it is possible to selectively make the enlarged display of only an object that is focused on in the content and that has been reduced, or to selectively make the reduced display of only an object that is focused on in the content and that has not fitted in the display width, by which the visibility (i.e. convenience for the user) in the content browsing on a terminal device can be enhanced while preventing an unnecessary increase in the processing load.

The enlargement or reduction of the object may be executed based on the display width of the second terminal device. Or the enlargement or reduction of the obj ect may be executed so that width of the object after the enlargement or reduction equals the display width of the display means.

The displaying method may be controlled so as to move an operation target position in the content displayed on the display means according to a user operation and automatically execute the enlargement or reduction of an object in the content when the operation target position has moved to the object due to the user operation.

The displaying method may further comprise the steps of: moving an operation target position in the content displayed on the display means according to a user operation; and letting a user select whether the enlargement or reduction should be executed for an object in the content or not when the operation target position has moved to the object due to the user operation.

In order to achieve the above object, in accordance with another aspect of the present invention, there is provided a displaying method for displaying content, created for a first terminal device having a first display screen size, on a second terminal device having display means with a display width smaller than that of the first display screen, comprising the steps of: judging whether or not data as a processing object is an image as a component of image data in a prescribed format (configured so that one or more operations can be specified for each image while associating them with coordinates) that has been associated with one of the operations; judging whether the image data in the prescribed format has been displayed on the display means in reduced display or not when the processing object data is judged to be an image as a component of the image data in the prescribed format; and enlarging and displaying the image, as the processing object data as a component of the image data in the prescribed format, when the image data in the prescribed format is judged to have been displayed on the display means in the reduced display.

With the above configuration, it is possible to selectively make the enlarged display of only a partial image that is focused on in the content and that has been reduced, by which the visibility (i.e. convenience) in the content browsing on a terminal device can be enhanced while preventing an unnecessary increase in the processing load. These effects are achieved remarkably since the object of the enlarged display is limited to image data in a prescribed format.

The enlargement of the image as a component may be executed based on the display width of the second terminal device. Or the enlargement of the image as a component may executed so that width of the image after the enlargement equals the display width of the display means.

The displaying method may be controlled so as to move an operation target position in the content displayed on the display means according to a user operation and automatically execute the enlargement of an image as a component of the image data in the prescribed format when the operation target position has moved to the image due to the user operation.

The displaying method may further comprise the steps of: moving an operation target position in the content displayed on the display means according to a user operation; and letting a user select whether the enlargement should be executed for an image as a component of the image data in the prescribed format or not when the operation target position has moved to the image due to the user operation.

When the content is created in a markup language, the enlargement of the image as a component of the image data in the prescribed format may be canceled when a host name of a URL of the image in the prescribed format differs from a host name of a URL of the content.

The image enlarged by the enlargement process may be displayed while overlaying it on the content. When the content is created in a markup language, the image data in the prescribed format can be an image map.

In order to achieve the above object, in accordance with another aspect of the present invention, there is provided a displaying method for displaying content, created for a first terminal device having a first display screen size, on a second terminal device having display means with a display width smaller than that of the first display screen, comprising the steps of: judging whether or not data as a processing object is an image as a component of image data in a prescribed format (configured so that one or more operations can be specified for each image while associating them with coordinates) that has been associated with one of the operations; judging whether the image data in the prescribed format is in a state not fitted in the display width of the display means or not when the processing object data is judged to be an image as a component of the image data in the prescribed format; and reducing and displaying the image, as the processing object data as a component of the image data in the prescribed format, when the image data in the prescribed format is judged to be in the state not fitted in the display width of the display means.

With the above configuration, it is possible to selectively make the reduced display of only a partial image that is focused on in the content and that has not fitted in the display width, by which the visibility (i.e. convenience) in the content browsing on a terminal device can be enhanced while preventing an unnecessary increase in the processing load. These effects are achieved remarkably since the object of the reduced display is limited to image data in a prescribed format.

The reduction of the image as a component may be executed based on the display width of the second terminal device. Or the reduction of the image as a component may be executed so that width of the image after the reduction equals the display width of the display means.

The displaying method may be controlled so as to move an operation target position in the content displayed on the display means according to a user operation and automatically execute the reduction of an image as a component of the image data in the prescribed format when the operation target position has moved to the image due to the user operation.

The displaying method may further comprise the steps of: moving an operation target position in the content displayed on the display means according to a user operation; and letting a user select whether the reduction should be executed for an image as a component of the image data in the prescribed format or not when the operation target position has moved to the image due to the user operation.

When the content is a Web page, the reduction of the image as a component of the image data in the prescribed format may be canceled when a host name of a URL of the image in the prescribed format differs from a host name of a URL of the content.

The image reduced by the reduction process may be displayed while overlaying it on the content. When the content is created in a markup language, the image data in the prescribed format can be an image map.

In order to achieve the above object, in accordance with another aspect of the present invention, there is provided a displaying method for displaying content including an object on display means of a terminal device, comprising the steps of: selectively reducing the object according to a prescribed condition; displaying the content including the reduced object on the display means; judging whether an object in content displayed on the display means has been reduced or not; and enlarging and displaying the object when the object is judged to have been reduced.

With the above configuration, only an object that has been reduced is selectively displayed in the enlarged display when the object is selected by the user, by which the visibility (i.e. convenience for the user) in the content browsing on a terminal device can be enhanced while preventing an unnecessary increase in the processing load.

The prescribed condition can be that the object should be reduced when the object does not fit in a display width of the display means.

The prescribed condition can be that the object should be reduced when the object exceeds a prescribed threshold value.

The displaying method described above can be implemented as a computer program which is configured so that the method described in any one of claims 1-31 is executed when the computer program is executed by a computer.

It is possible to implement a terminal device comprising control means which is configured to execute the frame displaying method described above.

It is also possible to implement a cellular phone comprising control means which is configured to execute the frame displaying method described above.

In order to achieve the above object, in accordance with another aspect of the present invention, there is provided a browser program for displaying content, described in a markup language for a first terminal device having a first display screen size, on a second terminal device having display means with a display width smaller than that of the first display screen, letting a computer implement the following functions: a function of judging whether or not data as a processing object is an image as a component of an image map; a function of judging whether the image map has been displayed on the display means in reduced display or not when the processing object data is judged to be an image as a component of the image map; and a function of enlarging and displaying the image, as the processing object data as a component, when the image map is judged to have been displayed on the display means in the reduced display.

With the above configuration, it is possible to selectively make the enlarged display of only an image as a component of an image map that is focused on in the content and that has been reduced, by which the visibility (i.e. convenience) in the content browsing on a terminal device can be enhanced while preventing an unnecessary increase in the processing load. These effects are achieved remarkably since the object of the enlarged display is limited to an image map.

In order to achieve the above object, in accordance with another aspect of the present invention, there is provided a browser program for displaying content, described in a markup language for a first terminal device having a first display screen size, on a second terminal device having display means with a display width smaller than that of the first display screen, letting a computer implement the following functions: a function of judging whether or not data as a processing object is an image as a component of an image map; a function of judging whether the image map is on the display means in a state not fitted in the display width of the display means or not when the processing object data is judged to be an image as a component of the image map; and a function of reducing and displaying the image, as the processing object data as a component, when the image map is judged to be in the state not fitted in the display width of the display means.

With the above configuration, it is possible to selectively make the reduced display of only an image as a component of an image map that is focused on in the content and that has not fitted in the display width, by which the visibility (i.e. convenience) in the content browsing on a terminal device can be enhanced while preventing an unnecessary increase in the processing load. These effects are achieved remarkably since the object of the reduced display is limited to an image map.

In order to achieve the above object, in accordance with another aspect of the present invention, there is provided a terminal device comprising: display means having a prescribed display width; and control means which is configured to execute the following processes (1) and (2) for content created for a first terminal device having a first display screen size larger than the prescribed display width: (1) judging whether an object in the content has been displayed on the display means in reduced display or not; and (2) enlarging and displaying the object when the object is judged to have been displayed in the reduced display.

With the above configuration, it is possible to selectively make the enlarged display of only an object that is focused on in the content and that has been reduced, by which the visibility (i.e. convenience for the user) in the content browsing on a terminal device can be enhanced while preventing an unnecessary increase in the processing load.

In order to achieve the above object, in accordance with another aspect of the present invention, there is provided a terminal device comprising: display means having a prescribed display width; and control means which is configured to execute the following processes (1) and (2) for content created for a first terminal device having a first display screen size larger than the prescribed display width: (1) judging whether an object in the content has been displayed in a state not fitted in the display width of the display means or not; and (2) reducing and displaying the object when the object is judged not to have fitted in the display width.

With the above configuration, it is possible to selectively make the reduced display of only an object that is focused on in the content and that has not fitted in the display width, by which the visibility (i.e. convenience for the user) in the content browsing on a terminal device can be enhanced while preventing an unnecessary increase in the processing load.

In accordance with another aspect of the present invention, there is provided a program for displaying content, created for a first terminal device having a first display screen size, on a second terminal device having display means with a display width smaller than that of the first display screen, letting a computer implement the following functions: a function of judging whether an obj ect in the content displayed on the display means of the second terminal device has been reduced or not; and a function of enlarging and displaying the object when the object is judged to have been reduced.

With the above configuration, it is possible to selectively make the enlarged display of only an object that is focused on in the content and that has been reduced, by which the visibility (i.e. convenience for the user) in the content browsing on a terminal device can be enhanced while preventing an unnecessary increase in the processing load.

In accordance with another aspect of the present invention, there is provided a program for displaying content, created for a first terminal device having a first display screen size, on a second terminal device having display means with a display width smaller than that of the first display screen, letting a computer implement the following functions: a function of judging whether an object in the content displayed on the display means of the second terminal device is in a state not fitted in the display width of the display means or not; and a function of reducing and displaying the object when the object is judged not to have fitted in the display width.

With the above configuration, it is possible to selectively make the reduced display of only an object that is focused on in the content and that has not fitted in the display width, by which the visibility (i.e. convenience for the user) in the content browsing on a terminal device can be enhanced while preventing an unnecessary increase in the processing load.

In accordance with another aspect of the present invention, there is provided a program for displaying content, created for a first terminal device having a first display screen size, on a second terminal device having display means with a display width smaller than that of the first display screen, letting a computer implement the following functions: a function of judging whether an object in the content displayed on the display means of the second terminal device has been reduced or not and enlarging and displaying the object when the object is judged to have been reduced; and a function of judging whether an object in the content displayed on the display means of the second terminal device is in a state not fitted in the display width of the display means or not and reducing and displaying the obj ect when the obj ect is judged not to have fitted in the display width.

With the above configuration, it is possible to selectively make the enlarged display of only an object that is focused on in the content and that has been reduced, or to selectively make the reduced display of only an object that is focused on in the content and that has not fitted in the display width, by which the visibility (i.e. convenience for the user) in the content browsing on a terminal device can be enhanced while preventing an unnecessary increase in the processing load.

In accordance with another aspect of the present invention, there is provided a program for displaying content, created for a first terminal device having a first display screen size, on a second terminal device having display means with a display width smaller than that of the first display screen, letting a computer implement the following functions: a function of judging whether or not data as a processing object is an image as a component of image data in a prescribed format (configured so that one or more operations can be specified for each image while associating them with coordinates) that has been associated with one of the operations; a function of judging whether the image data in the prescribed format has been displayed on the display means in reduced display or not when the processing object data is judged to be an image as a component of the image data in the prescribed format; and a function of enlarging and displaying the image, as the processing object data as a component of the image data in the prescribed format, when the image data in the prescribed format is judged to have been displayed on the display means in the reduced display.

With the above configuration, it is possible to selectively make the enlarged display of only a partial image that is focused on in the content and that has been reduced, by which the visibility (i.e. convenience) in the content browsing on a terminal device can be enhanced while preventing an unnecessary increase in the processing load. These effects are achieved remarkably since the object of the enlarged display is limited to image data in a prescribed format.

In accordance with another aspect of the present invention, there is provided a program for displaying content, created for a first terminal device having a first display screen size, on a second terminal device having display means with a display width smaller than that of the first display screen, letting a computer implement the following functions: a function of judging whether or not data as a processing object is an image as a component of image data in a prescribed format (configured so that one or more operations can be specified for each image while associating them with coordinates) that has been associated with one of the operations; a function of judging whether the image data in the prescribed format is in a state not fitted in the display width of the display means or not when the processing object data is judged to be an image as a component of the image data in the prescribed format; and a function of reducing and displaying the image, as the processing object data as a component of the image data in the prescribed format, when the image data in the prescribed format is judged to be in the state not fitted in the display width of the display means.

With the above configuration, it is possible to selectively make the reduced display of only a partial image that is focused on in the content and that has not fitted in the display width, by which the visibility (i.e. convenience) in the content browsing on a terminal device can be enhanced while preventing an unnecessary increase in the processing load. These effects are achieved remarkably since the object of the reduced display is limited to image data in a prescribed format.

In accordance with another aspect of the present invention, there is provided a displaying method for displaying content on a terminal device, comprising the steps of: judging whether an object in the content displayed on a display screen of the terminal device is in a state partially displayed within the display screen or not; and displaying the whole of the object while overlaying it on the currently displayed content when the object is in the state partially displayed within the display screen.

With the above configuration, the visibility for the user in the page browsing is enhanced with no unnecessary increase in the processing load.

The display of the whole object may be made so that the whole object is exactly fitted in screen width of the display screen.

In accordance with another aspect of the present invention, there is provided a browser program for displaying content on a terminal device, letting a computer implement the following functions: a function of judging whether an object in the content displayed on a display screen of the terminal device is in a state partially displayed within the display screen or not; and a function of displaying the whole of the object while overlaying it on the currently displayed content when the object is in the state partially displayed within the display screen.

With the above configuration, the visibility for the user in the page browsing is enhanced with no unnecessary increase in the processing load.

In accordance with another aspect of the present invention, there is provided a displaying method for displaying content on a terminal device, comprising the steps of: judging whether or not data as a processing object is an image as a component of image data in a prescribed format (configured so that one or more operations can be specified for each image while associating them with coordinates) that has been associated with one of the operations; judging, when the processing object data is judged to be an image as a component of the image data in the prescribed format, whether the image as a component is in a state partially displayed within a display screen of the terminal device or not; and displaying the whole of the image as a component while overlaying it on the currently displayed content when the image as a component is in the state partially displayed within the display screen.

With the above configuration, the visibility for the user in the page browsing is enhanced with no unnecessary increase in the processing load.

The display of the whole of the image as a component may be made so that the whole image is exactly fitted in screen width of the display screen.

In accordance with another aspect of the present invention, there is provided a browser program for displaying content on a terminal device, letting a computer implement the following functions: a function of judging whether or not data as a processing object is an image as a component of an image map; a function of judging, when the processing object data is judged to be an image as a component of the image map, whether the image as a component is in a state partially displayed within a display screen of the terminal device or not; and a function of displaying the whole of the image as a component while overlaying it on the currently displayed content when the image as a component is in the state partially displayed within the display screen.

With the above configuration, the visibility for the user in the page browsing is enhanced with no unnecessary increase in the processing load.

In accordance with another aspect of the present invention, there is provided a markup language document displaying method for displaying result of interpretation of a markup language document (described in a markup language and specifying at least one image as a display object) on a display device, comprising the steps of: counting the number N of images specified in the markup language document; determining memory consumption per image by dividing memory capacity of an image display memory area, assigned for image display in a memory of the display device, by the number N; determining a threshold value of a display area that corresponds to the determined memory consumption per image; and developing each image in the image display memory area while reducing the image as needed so that the image fits in the threshold value.

With the above markup language document displaying method, all the images specified in the ML document can be developed in the image display memory area and displayed irrespective of the size of the ML document, the number of images and the size of each image, by which the viewer is allowed to browse all the images intended by the creator even on a terminal device having a relatively small memory.

In accordance with another aspect of the present invention, there is provided a markup language document displaying method for displaying result of interpretation of a markup language document, described in a markup language and specifying at least one image as a display object, on a display device, comprising the steps of: calculating ratio of a display size of an image specified in the markup language document, specified in an image tag, to the sum of display sizes of all the images specified in the markup language document; determining maximum unit memory consumption to be assigned to the image in an image display memory area based on the calculated ratio; determining a threshold value of a display area that corresponds to the determined memory consumption per image; and developing the image in the image display memory area while reducing the image as needed so that the image fits in the threshold value.

With the above markup language document displaying method, all the images specified in the ML document can be developed in the image display memory area and displayed irrespective of the size of the ML document, the number of images and the size of each image, by which the viewer is allowed to browse all the images intended by the creator even on a terminal device having a relatively small memory.

Memory capacity of the image display memory area may be a preset fixed value. Or the memory capacity of the image display memory area may be determined dynamically based on a memory area remaining after reserving memory areas necessary for purposes different from image display.

The markup language document displaying method may further comprise the step of displaying a selected image, selected by a viewer from the images displayed on the display device, in enlarged display.

## BRIEF DESCRIPTION OF THE DRAWINGS

Fig. 1 is a block diagram showing the composition of a terminal device in accordance with a first embodiment of the present invention.

Fig. 2 is a functional block diagram of a browser as browsing software operating under the control of a CPU of the terminal device of Fig. 1.

Fig. 3 is a flow chart showing the operation of a dynamic enlargement process which is executed as a function of the browser of Fig. 2.

Fig. 4 is a flow chart showing the operation of a dynamic enlargement process which is executed as a function of a browser in accordance with a second embodiment of the present invention.

Fig. 5 is a schematic diagram showing examples of a display screen when an image map is displayed in enlarged display by the dynamic enlargement process of Fig. 4.

Fig. 6 is a flow chart showing the operation of a dynamic enlargement/reduction process which is executed as a function of a browser in accordance with a third embodiment of the present invention.

Fig. 7 is a schematic diagram showing examples of the display screen when an image map is displayed in reduced display by the dynamic enlargement/reduction displaying process of Fig. 6.

Fig. 8 is a schematic diagram showing an example of content representing a combined image.

Fig. 9 shows an example in which the content of Fig. 8 has been displayed on the display.

Fig. 10 is a schematic diagram for explaining a state in which content for PCs has been displayed in a PC mode.

Fig. 11 is a schematic diagram for explaining a situation in which there exists an image partially displayed within the display screen in the PC mode display.

Fig. 12 is a schematic diagram showing a state in which the whole of an image has been displayed on the display screen by a dynamic enlargement/reduction process in accordance with a fourth embodiment of the present invention.

Fig. 13 is a flow chart showing the operation of the dynamic enlargement/reduction process in accordance with the fourth embodiment of the present invention.

Fig. 14 is a flow chart showing an operation in a case where the dynamic enlargement/reduction process of Fig. 13 is applied to an image map.

Fig. 15 is an external view of a cellular phone terminal in accordance with a fifth embodiment of the present invention.

Fig. 16 is a block diagram showing the hardware configuration of the cellular phone terminal in accordance with the first embodiment of the present invention.

Fig. 17 is a block diagram showing the composition of a browser in accordance with the first embodiment of the present invention.

Fig. 18 is a flow chart showing a markup language document displaying process in accordance with the first embodiment of the present invention.

Fig. 19 is a flow chart showing image processing in accordance with the first embodiment of the present invention.

Fig. 20 is a conceptual diagram showing a modification of the fifth embodiment of the present invention regarding the counting of the number of images.

## BEST MODE FOR CARRYING OUT THE INVENTION

<First Embodiment>

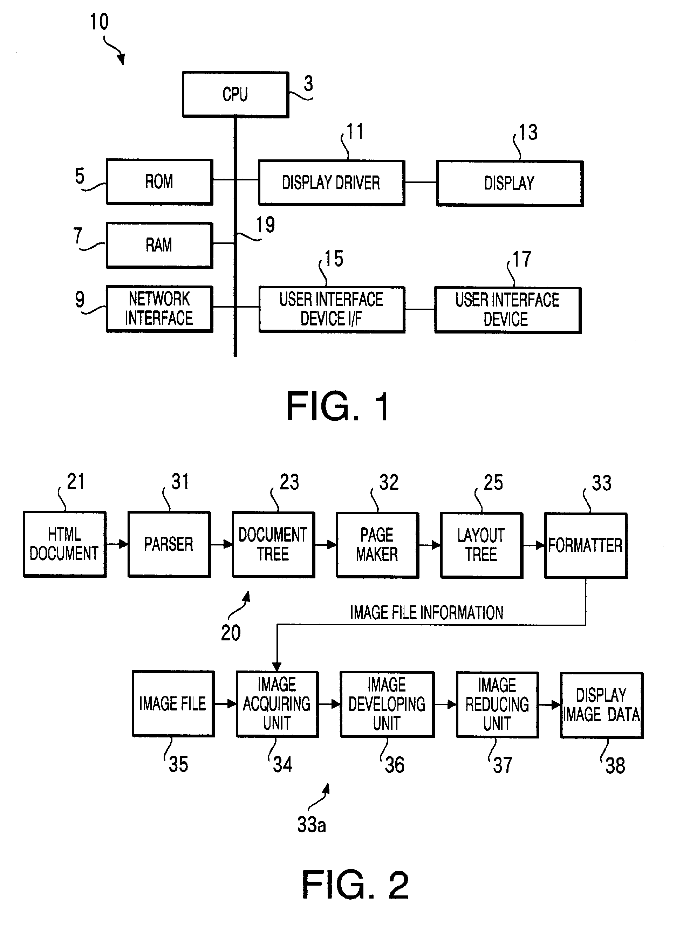

In the following, a first embodiment of the present invention will be described. Fig. 1 is a block diagram showing the composition of a terminal device 10 in accordance with a first embodiment of the present invention. Fig. 2 is a functional block diagram of a browser 20 as browsing software operating under the control of a CPU 3 of the terminal device 10.

The terminal device 10 is assumed to have a relatively small display screen compared to PCs (Personal Computers). Assuming that the number of pixels arranged in the horizontal direction is 800 dots or more in a PC, the terminal device 10 can mean a cellular phone (100 - 200 dots in the horizontal direction of the display screen), a PDA (150 - 640 dots), a car navigation system (640 dots or more), etc.

As shown in Fig. 1, the terminal device 10 includes a CPU 3 for the overall control of the terminal device 10, a ROM 5 storing various programs for letting the terminal device 10 perform prescribed operations, a RAM 7, a network interface 9, a display driver 11 and a user interface device I/F 15. These components are connected together by a bus 19. Further, a display 13 and a user interface device 17 are connected to the CPU 3 via the display driver 11 and the user interface device I/F 15, respectively.

The user interface device 17 is an operation unit including a directional key, numeric keys, a confirmation key, etc. In the ROM 5, a program of the browser 20 which will be explained below has been stored. The browser 20 is activated when a prescribed operation is performed by the user through the user interface device 17.

As shown in Fig. 2, the browser 20 includes a parser 31, a page maker 32 and a formatter 33 as functional blocks. The parser 31 parses logical structure of an HTML document (page) 21 acquired via the network interface 9 and thereby generates a document tree 23 in regard to the structure of the HTML document. Incidentally, the document tree 23 does not include information on expressions of the document. Subsequently, the page maker 32 generates a layout tree 25, including information on expressive forms (block, inline, table, list, item, etc.) specified by tags, based on the document tree 23. The layout tree 25 represents the order of arrangement of blocks, inlines, tables, etc. in the document. Incidentally, the layout tree 25 does not include detailed information on the layout, such as the position, the width and the height of each of the elements on the screen, the position of a line feed in a character string, etc.

The formatter 33 sets the layout based on the layout tree 25 and by use of information on the actual display screen such as the width of the display screen. Specifically, the formatter 33 successively places the elements of the layout tree 25 on the actual display screen and determines the line feed positions of character strings and the position, width and height of each element on the screen. By the above process by the parser 31, the page maker 32 and the formatter 33, the HTML document 21 is displayed on the display screen of the terminal device 10.

The formatter 33 has a function of reducing the size of an object (image, etc.) and giving line feeds to text according to the width of the display screen of the terminal device 10 (i.e. display width of the display 13), that is, a function of fitting the page in the display screen, as a function for realizing high visibility of content created for PCs on the terminal device 10. With the function, content created for PCs can be displayed on the display 13 of the terminal device 10 without the need of horizontal scrolling. In this case, the object such as an image is displayed on the display screen after being reduced to fit in the display screen width.

The object reducing process by the formatter 33 will be explained below taking an image as an example. As shown in Fig. 2, the formatter 33 hands over image file information (such as the location and the name of an image file specified by an image tag in the HTML document 21) to an image processing unit 33a. In the image processing unit 33a, an image acquiring unit 34 acquires the image file 35 based on the image file information. The acquired image file 35 is developed by an image developing unit 36 into image data in the bitmap format, etc. in a temporary memory area (unshown) of the RAM 7, by use of an image decoder suitable for the type of the image file. Subsequently, the size of the developed image data is reduced as needed by an image reducing unit 37 so that the image data can fit in a threshold value "max_image_size" as will be explained later, and the reduced image data (hereinafter referred to as "display image data") 38 8 is outputted.

Incidentally, while the image reducing unit 37 executes the image reduction after the image development by the image developing unit 36 in this example, the development and the reduction may also be executed at the same time by developing the image file so that the display size of the image file will fit in the threshold value. In short, the image developing unit 36 may function also as the image reducing unit 37.

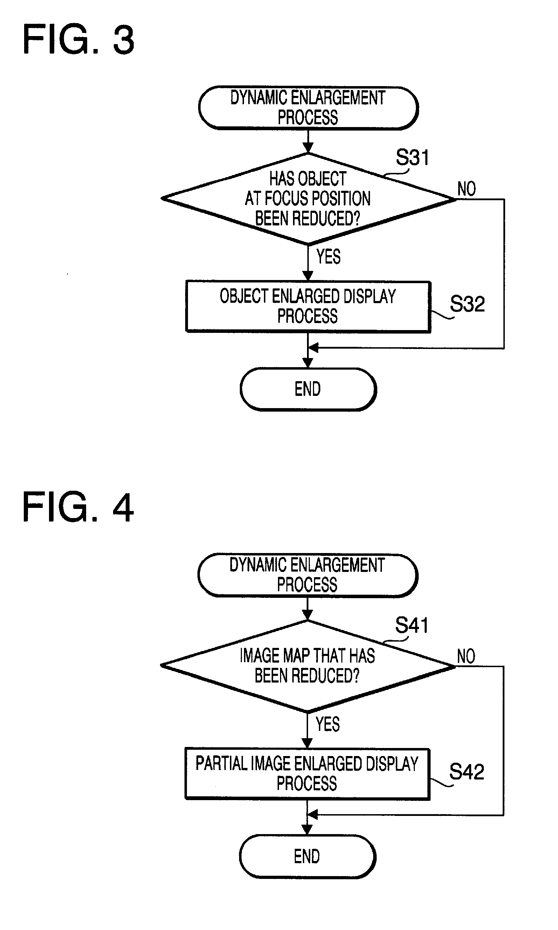

Fig. 3 is a flow chart showing the operation of a dynamic enlargement process which is executed as a function of the above browser 20. The process of Fig. 3 is executed in response to a user operation for moving the focus (i.e. operation target position), or at prescribed time intervals.

In step S31, whether an object (icon, image, image map, etc.) at the focus position is a reduced object or not is judged. Specifically, whether the size of the object at the focus position on the display screen is smaller than the original size of the object or not is judged. For example, when the original size of the object is larger than the display screen width of the terminal device 10 and the object has been reduced by the aforementioned "function of fitting the page in the display screen", the judgment of this step S31 results in "YES".

Here, the judgment of the step S31 will be explained in more detail. The display of the image (object) by the browser 20 is made through a plurality of steps such as the acquisition of the image file, the development in the memory and the rendering onto the screen. The image reduction is executed in the development in the memory, in the rendering, or in both of the stages. Thus, the judgment on whether the image has been reduced or not can be made by directly comparing the image after the rendering with the image file.

Further, the browser generally attaches a flag, indicating whether an image has been reduced or not, to a pointer representing the position of the image in the memory. Therefore, the judgment on whether the image has been reduced or not can be made also by use of the flag. Or the browser is capable of acquiring attribute information about reduction designation which has been attached to the object in the page, and thus the judgment on whether the image has been reduced or not can be made also by use of the attribute information.

When the object is judged to be a reduced object (S31: YES), an enlarged display process is executed for the object at the focus position (S32). The enlarged display process is executed based on the display screen width of the terminal device 10. For example, the object image may be enlarged so that the width of the object image equals the display screen width. Or the enlarged image may be displayed while being overlaid on the currently displayed page.

After the enlarged display process (S32) is finished, the dynamic enlargement process is ended. Incidentally, when the focus is moved to the next object in the state in which the previous (current) object has been displayed in the enlarged display, a process for erasing the enlarged display of the previous object is executed prior to the process of Fig. 3.

By the dynamic enlargement process described above, when the object focused on by the user is a reduced object (i.e. hard to view), the object is automatically displayed in the enlarged display. Thus, the object which is drawing the user's attention is automatically displayed in the enlarged display to be easily visible. In page browsing, the user generally hopes to check an object (especially, an image itself), and thus convenience for the user is enhanced by this embodiment. Since only an object that is focused on in the page and that has been reduced is selectively displayed in the enlarged display, the visibility (i.e. convenience) in the page browsing on a mobile terminal device can be enhanced while preventing an unnecessary increase in the processing load.

The above first embodiment can be paraphrased as below. In the size reduction of an object (e.g. image), the formatter 33 of the browser 20 selectively reduces an object based on the judgment on whether or not the object fits in the display screen width of the display 13. The formatter 33 judges whether an obj ect in the content displayed on the display 13 has been reduced or not, and displays the object in the enlarged display when the object is judged to have been reduced.

The condition of the selective reduction of an object may be set differently. For example, the formatter 33 may also be configured to reduce the size of an object to a prescribed threshold value or less when the size of the object exceeds the prescribed threshold value. The threshold value can be, for example, one regarding the size of a display area of the object when the content is displayed on the display 13. In this case, when the display area of the object exceeds the threshold value, the formatter 33 reduces the image to be within the threshold value and displays the image. Or the threshold value can be one regarding a memory size (in a display memory area used for displaying the content) occupied by the object. In this case, when the memory size occupied by the object when the object to be displayed is developed in the display memory area exceeds the threshold value, the formatter 33 reduces the object to be within the threshold value.

In either case, when an object in the content displayed on the display 13 is selected by the user, for example, whether the selected object has been reduced or not is judged, and the object is displayed in the enlarged display when the object is judged to have been reduced. Therefore, only an object that has been reduced is selectively displayed in the enlarged display when the object is selected by the user similarly to the first embodiment, by which the visibility (i.e. convenience) in the page browsing on a mobile terminal device can be enhanced while preventing an unnecessary increase in the processing load.

<Second Embodiment>

In the following, a second embodiment of the present invention will be described. The second embodiment corresponds to a modification of the aforementioned dynamic enlargement process (Fig. 3). The composition of the terminal device and the browser in this embodiment is equivalent to that in the first embodiment, and thus the reference characters which have been used in Figs. 1 and 2 will also be used in the explanation of this embodiment.

Fig. 4 is a flow chart showing the operation of a dynamic enlargement process which is executed as a function of the browser 20 in this embodiment. Similarly to the process of Fig. 3, the process of Fig. 4 is executed in response to a user operation for moving the focus, or at prescribed time intervals.

In the process of Fig. 4, when an image (hereinafter referred to as a "partial image") as a component of an image map is focused on, the partial image is displayed in the enlarged display. Incidentally, the image map is an image which is configured so that one or more operations can be specified for each image while associating them with coordinates, in which an operation such as a hyperlink can be assigned to each partial image as a component. The user of the terminal device 10 can activate a desired operation that has been assigned to a partial image on the image map, by moving the focus on the image map by operating the directional key and thereafter operating the confirmation key.

When the focus position on the page operation screen is moved by the user, whether the object at the focus position is a partial image of an image map and the image map is a reduced image map or not is judged in step S41. Incidentally, the image map is judged as a reduced image map in this step S41 when the image map has been reduced by the aforementioned "function of fitting the page in the display screen". Whether an image is an image map or not can be judged based on the presence/absence of a MAP element.

When the object at the focus position is a partial image of an image map and the image map has been reduced (S41: YES), the partial image at the focus position is displayed in the enlarged display (S42). The enlargement of the partial image is executed based on the display screen width of the terminal device 10. For example, the partial image may be displayed in the enlarged display so that the width of the partial image equals the display screen width.

On the other hand, when the image at the focus position is judged not to be an image map or when an image map at the focus position is judged not to have been reduced, the dynamic enlargement process is ended. Incidentally, when the focus is moved in the state in which a partial image has been displayed in the enlarged display, a process for erasing the enlarged display is executed prior to the process of Fig. 4.

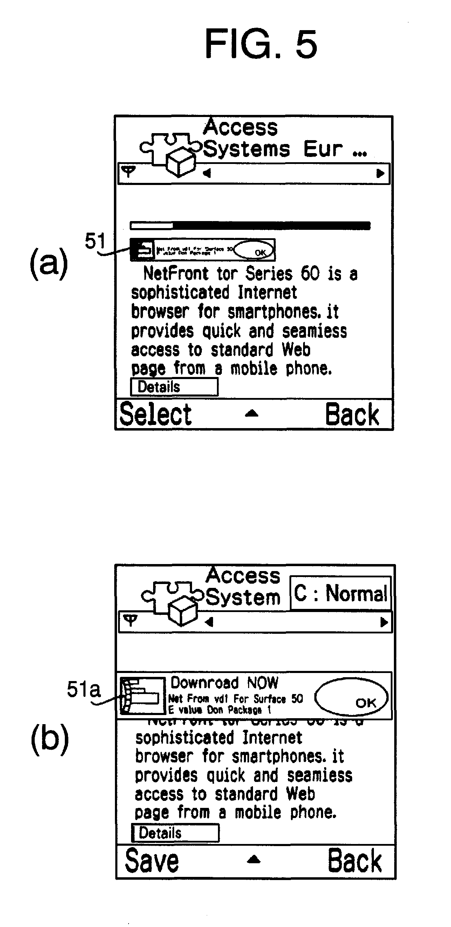

Fig. 5 is a schematic diagram showing examples of the display screen when an image map is displayed in the enlarged display by the above dynamic enlargement process. Fig. 5(a) shows a state in which a page has been displayed on the display screen by the aforementioned "function of fitting the page in the display screen". The display screen contains an image 51 of an image map which has been displayed in the reduced display. When the image 51 in this state is focused on by a user operation, an enlarged image 51a of the image 51 is overlaid on the display screen as shown in Fig. 5(b).

By the dynamic enlargement process described above, when a partial image of an image map focused on by the user has been displayed in the reduced display, the partial image is automatically displayed in the enlarged display. Thus, the partial image which is drawing the user's attention is automatically displayed in the enlarged display to be easily visible. The image of an image map does not generally include detailed information that can be recognized by the user only when the information is viewed as an image, and thus the convenience for the user during the use of an image map is especially enhanced by this embodiment. Compared to a method displaying text information on the focused partial image by use of the "alt" attribute, etc. of the partial image in the image map, the convenience for the user can be more enhanced by the dynamic enlarged display of this embodiment.

Since only a part of an image map that is focused on in the page and that has been reduced is selectively displayed in the enlarged display, the visibility (i.e. convenience) in the page browsing on a mobile terminal device can be enhanced while preventing an unnecessary increase in the processing load. These effects are achieved remarkably since the object of the enlarged display is an image map.

Modifications of the second embodiment will be described below. While the partial image at the focus position is automatically displayed in the enlarged display when the partial image has been reduced in the above embodiment, it is possible to allow the user to select whether to actually make the enlarged display or not, by displaying a dialog (for letting the user select whether to make the enlarged display or not) when a partial image is focused on.

It is also possible to cancel the enlarged display of advertisements by adding a process of comparing the URL (Uniform Resource Locator) of the storage location of the image map with the URL of the storage location of the page to the judgment process of the step S41. Specifically, when the host name of the URL of the storage location of the image map differs from the URL of the storage location of the content of the page, the image map is regarded as advertisements and the enlarged display process of the step S42 is canceled. By avoiding the enlarged display of advertisements as above, the convenience for the user can be enhanced while preventing the increase in the processing load more efficiently by leaving out the enlarged display of images that are regarded as undesired by the user (i.e. by leaving out unnecessary processes).

<Third Embodiment>

In the following, a third embodiment of the present invention will be described. The third embodiment corresponds to a modification of the dynamic enlargement process of the second embodiment (Fig. 4). The composition of the terminal device and the browser in this embodiment is equivalent to that in the first embodiment, and thus the reference characters which have been used in Figs. 1 and 2 will also be used in the explanation of this embodiment.

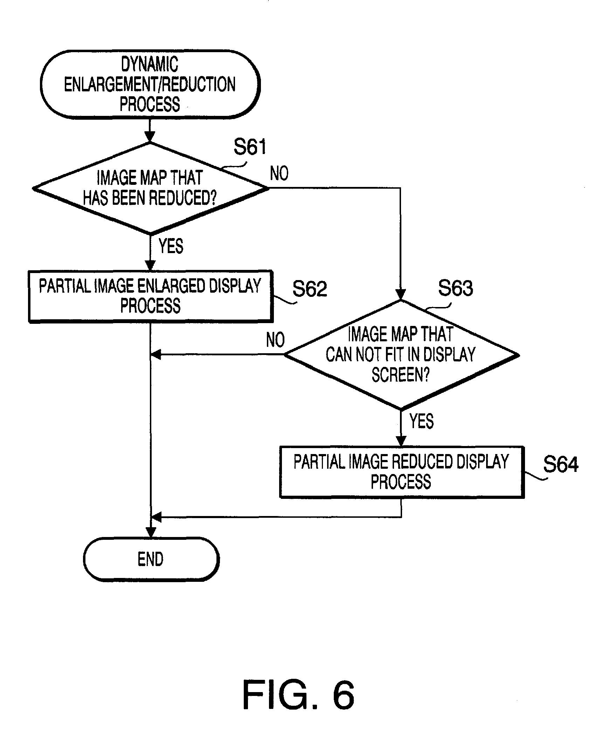

Fig. 6 is a flow chart showing the operation of a dynamic enlargement/reduction process which is executed as a function of the browser 20 in this embodiment. Similarly to the process of Fig. 4, the process of Fig. 6 is executed in response to a user operation for moving the focus, or at prescribed time intervals. This embodiment is applied to both of the following cases: a case where the page is displayed on the display screen by the "function of fitting the page in the display screen" and a case where the page is displayed by a normal process not by the function. In other words, in the case where an image map is focused on, the image is enlarged when the image map has been reduced, or the image is displayed in the reduced display so as to fit in the display screen when the image map has been displayed in its original size and has not been fitted in the display screen.

When the object at the focus position is a partial image of an image map and the image map has been reduced (S61: YES), the partial image at the focus position is displayed in the enlarged display (S62). The enlargement of the partial image is executed based on the display screen width of the terminal device 10. For example, the partial image may be displayed in the enlarged display so that the width of the partial image equals the display screen width. Or the partial image may be displayed in its original size when the original size is smaller than the display screen width.

On the other hand, when the image at the focus position is judged not to be an image map or when an image map at the focus position is judged not to have been reduced, the process advances to step S63. When it is judged that an image map has been displayed in the original size and has not fitted in the display screen in the step S63 (S63: YES), a reduced display process for the partial image is executed (S64). The reduction is executed based on the display screen width. For example, the partial image may be reduced so that the width of the partial image equals the display screen width. After the step S64 is finished, this process is ended. When the judgment condition of the step S63 is not satisfied (S63: NO), this process is ended since the reduced display of the image is not necessary in this case. Incidentally, when the focus is moved in the state in which a partial image has been displayed in the enlarged/reduced display, a process for erasing the enlarged/reduced display is executed prior to the process of Fig. 6.

Incidentally, while the reduction process of the step S64 is configured to reduce a partial image of an image map, the reduction process of the step S64 may also be configured to reduce the image map so that the whole image map fits in the display screen. In this case, the whole image map becomes visible on the display screen by image reduction, similarly to the case where a partial image becomes visible on the display screen by image reduction.

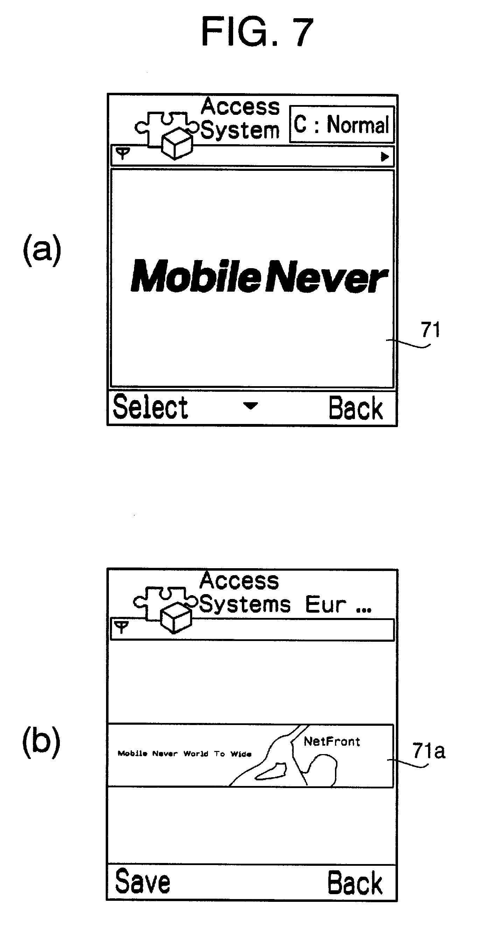

Fig. 7 is a schematic diagram showing examples of the display screen when an image map is displayed in the reduced display (step S64) by the above dynamic enlargement/reduction displaying process. Fig. 7(a) shows a state in which a page has been displayed in normal display on the display screen of the terminal device 10. The display screen includes an image 71 of an image map. Since the image 71 has been displayed in the normal display (i.e. without being reduced), the image 71 is in a state not fitted in the display screen width.

When the image 71 in the state of Fig. 7(a) is focused on by a user operation, the image 71 is reduced and displayed as a reduced image 71a overlaid on the display screen as shown in Fig. 7(b).

By the function of the enlargement process in this embodiment, effects similar to those of the second embodiment are achieved. By the function of the reduction process in this embodiment, when a partial image of an image map focused on by the user can not fit in the display screen width, the partial image is automatically displayed in the reduced display. Thus, the partial image which is drawing the user's attention is automatically displayed in the reduced display to be easily visible. The image of an image map does not generally include detailed information that can be recognized by the user only when the information is viewed as an image, and thus the convenience for the user during the use of an image map is especially enhanced by this embodiment. Since only a part of an image map that is focused on in the page and that can not fit in the display screen is selectively displayed in the reduced display, the visibility (i.e. convenience) in the page browsing on a mobile terminal device can be enhanced while preventing an unnecessary increase in the processing load. These effects are achieved remarkably since the object of the reduced display is an image map.

Incidentally, while the dynamic enlargement/reduction displaying process shown in Fig. 6 processes an image map, various objects other than image maps (ordinary images, etc.) can also be processed by the dynamic enlargement/ reduction displaying process. Also in such cases, the visibility (i.e. convenience) in the page browsing can be enhanced while preventing an unnecessary increase in the processing load.

While the process of this embodiment shown in Fig. 6 is configured to have both the enlargement function and the reduction function, an embodiment having the reduction function (steps S63 and S64) only is also possible. The reduced display can also be controlled so that the reduction is canceled for advertisements, by a process similar to the process explained in the second embodiment.

<Fourth Embodiment>

In the following, a fourth embodiment of the present invention will be described. The composition of the terminal device and the browser in this embodiment is equivalent to that in the first embodiment, and thus the reference characters which have been used in Figs. 1 and 2 will also be used in the explanation of this embodiment.

In the first through third embodiments described above, the browser 20 has the function for realizing high visibility of content created for PCs on the terminal device 10, and an object such as an image is processed (e.g. reduced) and displayed by the function so as to fit in the display screen of the terminal device 10. The dynamic enlargement process and the dynamic enlargement/reduction process shown in Figs. 3, 4 and 6 have assumed that the "function of fitting the page in the display screen" is executed by the browser 20.

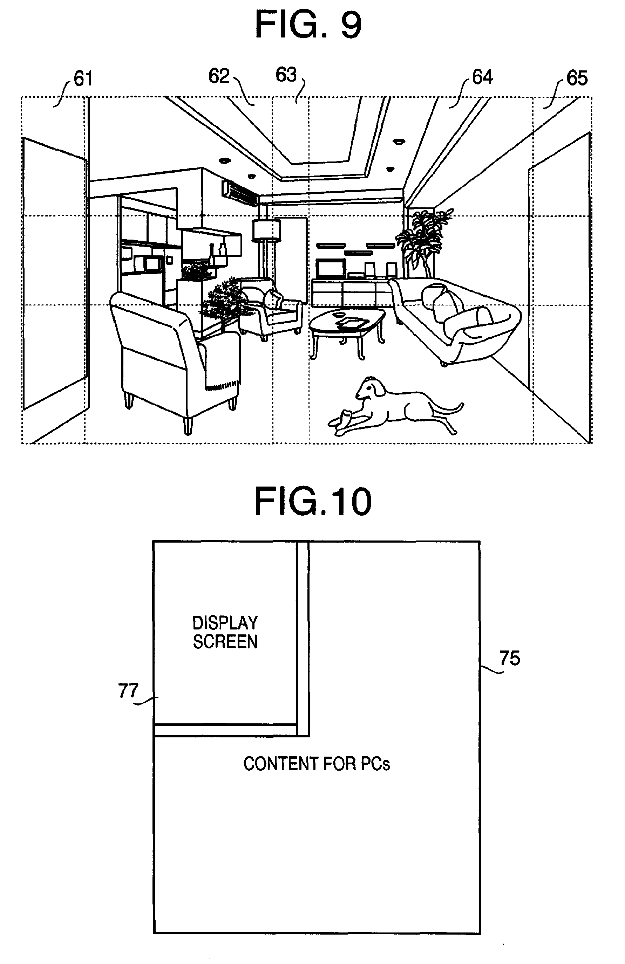

However, the browser 20 is also capable of displaying such content created for PCs in its original layout. Such a display mode of the browser 20 will hereinafter be referred to as a "PC mode". In the PC mode, a layout modification process, such as giving line feeds to text and reducing an image according to the width of the display screen, is not executed. The display in the PC mode is made as if a part of the content 75 for PCs were peeked at through the display screen 77 of the terminal device 10 as shown in Fig. 10. The browser 20 executes the display control so that not only the vertical scrolling but also the horizontal scrolling is possible.

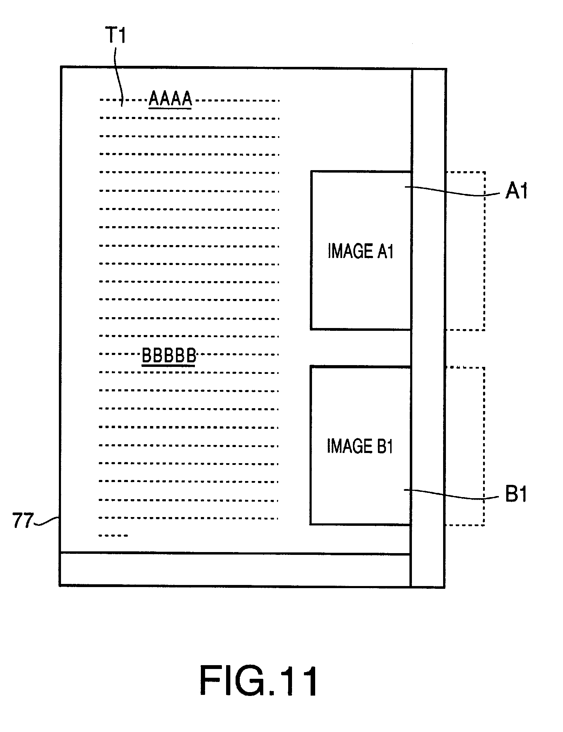

When content for PCs is displayed in the PC mode, there can be a state in which only a part of an image is displayed on the display screen 77 as shown in Fig. 11. In the example of Fig. 11, images A1 and B1 are in this state. The occurrence of this state in a conventional browser results in the following disadvantages:

- When the user moves the focus to the image A1, for example, the focus certainly moves to the image A1; however, the user can not view the whole of the image A1 by just moving the focus.
- While a configuration, automatically performing the horizontal scrolling to let the whole image A1 be visible when the focus is moved to the image A1 in the state of Fig. 11, can be devised with ease, the operation might be sluggish in this case. Further, if such horizontal scrolling occurs independently of the user's intention, that can be disadvantageous to the user when the user is intending to view a text part T1. Furthermore, when the horizontal scrolling has occurred independently of the user's intention, the user has to restore the display to the original state by manually performing the horizontal scrolling operation in order to view the text part T1. Such an operation is very troublesome to the user.

In order to avoid such disadvantages and enhance the convenience for the user, a display process described below is executed in this embodiment.

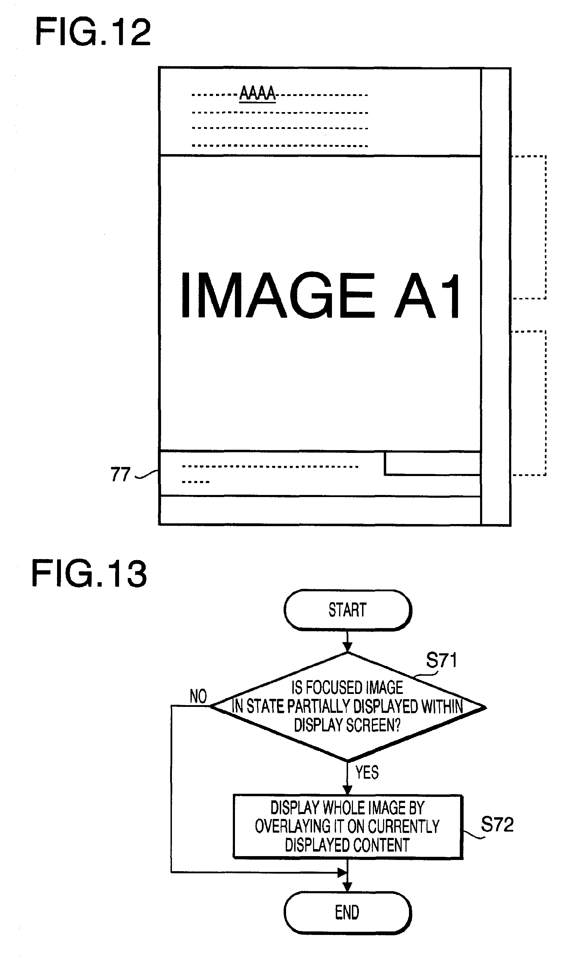

When the focus has moved to an image (assumed here to be the image A1) partially displayed within the display screen 77 as shown in Fig. 11 (or when the user has selected the image A1), a window showing the whole image A1 is displayed by overlaying the window on the content display screen of the browser as shown in Fig. 12. The display of the window showing the whole image A1 is made based on the screen width of the display screen 77.

The display of the window showing the whole image A1 is desired to be performed so that the image A1 exactly fits in the display width of the display screen 77. Specifically, the browser 20 enlarges the image A1 when the image A1 in the PC mode display is smaller than the display screen 77, while reducing the image A1 when the image A1 in the PC mode display is larger than the display screen 77. With this configuration, user operability in the PC mode can be enhanced by the prevention of the occurrence of the useless horizontal scrolling and the enforced horizontal scrolling operation by the user. Unnecessary increase in the processing load is prevented differently from a case where every focused image is displayed in the enlarged display.

Fig. 13 is a flow chart showing the operation of a dynamic enlargement/reduction process in accordance with the fourth embodiment, which is executed as a function of the browser 20. The process of Fig. 13 is executed in response to a user operation for moving the focus (or user operation for selecting an object), or at prescribed time intervals. It is assumed in this embodiment that the display in the PC mode has been made. In step S71 shown in Fig. 13, the browser 20 judges whether the focused image is in the state partially displayed within the display screen 77 or not. When the focused image is in the state partially displayed within the display screen 77 (S71: YES), a window showing the whole of the image is displayed by overlaying the window on the currently displayed content as shown in Fig. 12 (S72). Thereafter, this process is ended. When the focused image is not in the state partially displayed within the display screen 77 (S71: NO), this process is ended without executing the step S72.

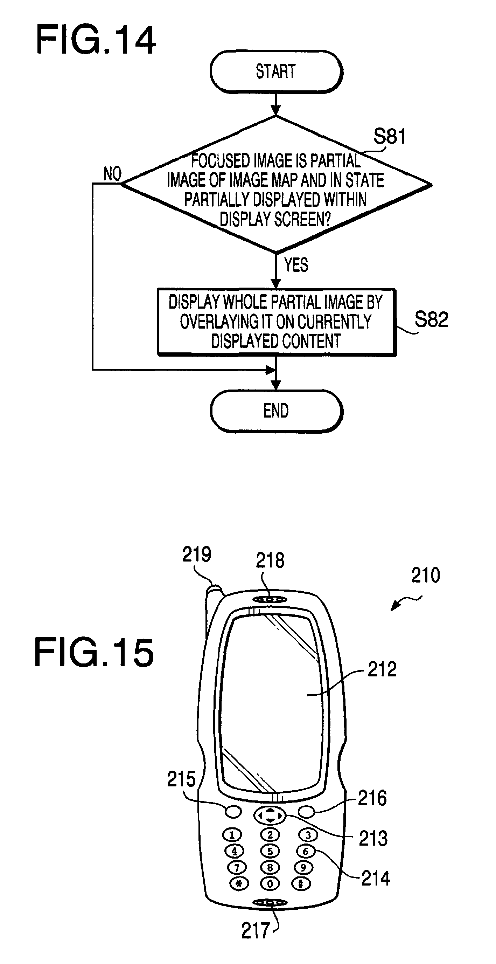

The fourth embodiment described above is applicable not only to the display of ordinary images but also to the display of various objects such as a partial image of an image map. Fig. 14 shows an example in which the dynamic enlargement/reduction process shown in Fig. 13 is applied to an image map. As shown in Fig. 14, the browser 20 first judges whether the object at the focus position is a partial image of an image map and the partial image is in the state partially displayed within the display screen 77 or not (S81). When the object at the focus position is a partial image that is in the state partially displayed within the display screen 77 (S81: YES), a window showing the whole of the partial image is displayed by overlaying the window on the currently displayed content as shown in Fig. 12 (S82). Thereafter, this process is ended. When the judgment condition of S81 is not satisfied (S81: NO), this process is ended without executing the step S82.

In the above first through fourth embodiments each of which is made up of a combination of various features, it is understandable that not all the features are necessarily requisite. For each of the embodiments, omission of part of the features or replacement of part of the features with other functions is possible without departing from the scope and spirit of the present invention.

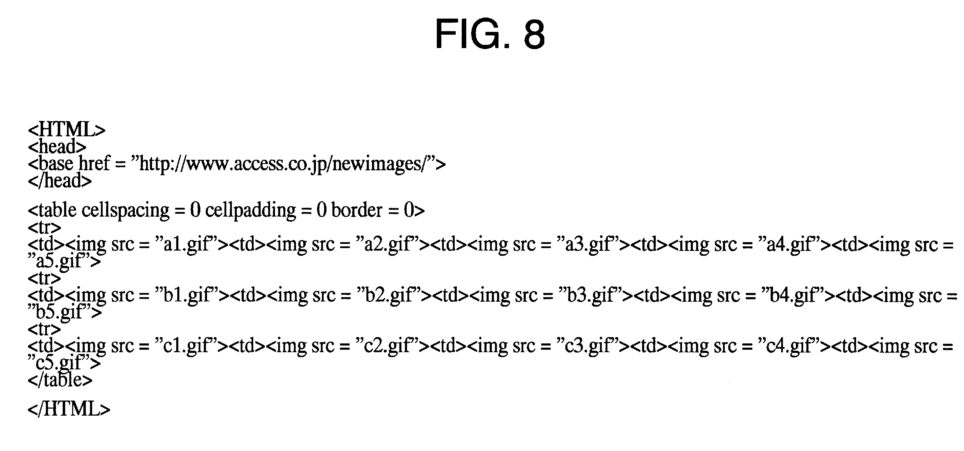

For example, while an image has been taken as an example of an object in the explanation of the above first through fourth embodiments, the unit of "image" is not restricted to one image specified by an image tag like <img>. For example, an image made up of a plurality of images (specified by image tags) combined together (hereinafter referred to as a "combined image") can also be handled as one image, that is, one object. An example of content representing a combined image is shown in Fig. 8. Fig. 9 shows an example in which the content of Fig. 8 has been displayed on the display 13. The image of Fig. 9 is a table made up of 5 x 3 cells in the HTML description of Fig. 8, in which each cell is formed of partial image data. For example, image data "a1.gif", "a2.gif", "a3.gif", "a4.gif" and "a5.gif" in the HTML document of Fig. 8 correspond to partial images 81, 82, 83, 84 and 85 in the first line of Fig. 9, respectively.

The content of Fig. 8 is handled as an object of the dynamic enlargement process (Fig. 3) when the content is judged by the formatter 33 to be a combination of images. As above, by this embodiment, when a table is a combination of images, the whole combined image is displayed in the enlarged display, by which the content created for PCs can be browsed on the terminal device 10 while maintaining its original information. Incidentally, also in the dynamic enlargement process for a combined image, when the whole combined image can not fit in the display screen, a reduction process is executed dynamically so that the combined image as a unit fits in the screen similarly to the example of Fig. 6 regarding an image map.

While the above embodiments have been explained on the assumption that the display screen width of the terminal device 10 is smaller than that of PCs, the present invention is similarly applicable to cases where content created for a first terminal device having a first display screen size is displayed on a second terminal device having a display means with a display width smaller than that of the first display screen.

<Fifth Embodiment>

In the following, a fifth embodiment of the present invention will be described. This embodiment is capable of resolving a problem which will be described below. The browser interprets a markup language document (hereinafter referred to as an "ML document") described in a markup language and displays one or more display objects (texts, images, etc.), which have been specified in the ML document as display content, on the display in a layout according to the result of the interpretation. As for images, for example, the browser displays each image which has been specified in the ML document as display content by use of an image tag <img src="IMAGE FILE NAME"> as image attribute information, as described in Japanese Patent Publication No. 2987355. Further, when the width and the height of an area for displaying an image has been specified (like "width=180 height=120") in an image tag, the browser displays the image after enlarging or reducing the image to the size. Since the image file of the image has generally been compressed according to an image format like GIF or JPEG, the browser decompresses the image file into image data according to the image format, executes a reduction/enlargement process as needed, and thereafter develops the image data into the display image data in a memory.

In a device having a restriction on memory such as a fixed-line phone, cellular phone, PHS, internet television, car navigation system, PDA or household electrical appliance (hereinafter referred to as a "terminal device"), when a text or image defined in the ML document as display content has to be displayed on the display of the terminal device and there is no free area in the memory for the development of the image file specified by an image tag into the display image data, the browser displays a substitute text or icon instead of displaying the image itself. Thus, there is a possibility of a disadvantage of being incapable of displaying all the images specified in the ML document (intended for the user or viewer by the creator) as display content. This embodiment is capable of resolving such a problem.

Fig. 15 is an external view of a cellular phone terminal in accordance with the fifth embodiment of the present invention. The cellular phone terminal 210 includes a liquid crystal display 212 for displaying information, a directional key 213, dialing keys 214 used for entering numbers, characters, symbols, etc., an on-hook button 215 used for originating and receiving a call, and an off-hook button 216 used for disconnecting a call, on the front of its casing 211. The casing 211 is further provided with a microphone 217 and a speaker 218 for conversation and an antenna 219 for wireless communication.

Incidentally, the present invention is applicable not only to the cellular phone terminal 210 but also to a variety of display terminal devices such as a fixed-line phone, PHS, internet television, car navigation system, PDA and household electrical appliance.

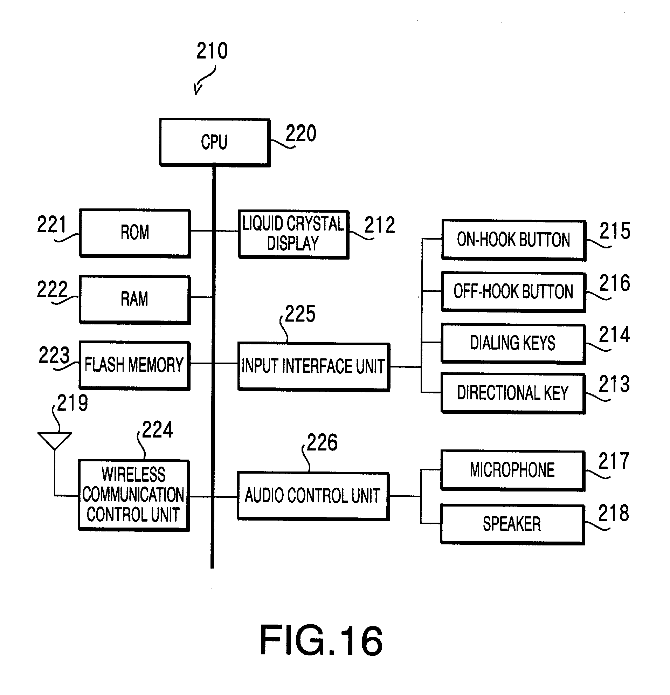

Fig. 16 is a block diagram showing the hardware configuration of the cellular phone terminal 210. The cellular phone terminal 210 includes a CPU 220 for controlling the whole of the terminal. The CPU 220 is connected with a ROM 221, a RAM 222, a flash memory 223, a wireless communication control unit 224, the liquid crystal display 212, an input interface 225 and an audio control unit 226. The antenna 219 is connected to the wireless communication control unit 224. Various keys such as the directional key 213, the dialing keys 214, the on-hook button 215 and the off-hook button 216 are connected to the input interface unit 25. The microphone 217 and the speaker 218 are connected to the audio control unit 26.

The ROM 221 is a nonvolatile read-only memory storing various programs to be executed by the CPU 220 and fixed data. The RAM 222 is a rewritable memory which provides the CPU 220 with work areas and temporary data storage areas. The flash memory 223 is a nonvolatile rewritable memory which nonvolatilely stores additional application programs and various data. The wireless communication control unit 224 is a unit for executing wireless voice/data communication (transmission and reception) with base stations via the antenna 219. The liquid crystal display 212 forms a display unit having a display screen. The input interface unit 225 is a unit for receiving input operations of the user through the dialing buttons 214 and the directional key 213 of an operation unit of the cellular phone terminal 210. The audio control unit 226, connected with the microphone 217 and the speaker 218, is a unit for controlling the input and output of sound.

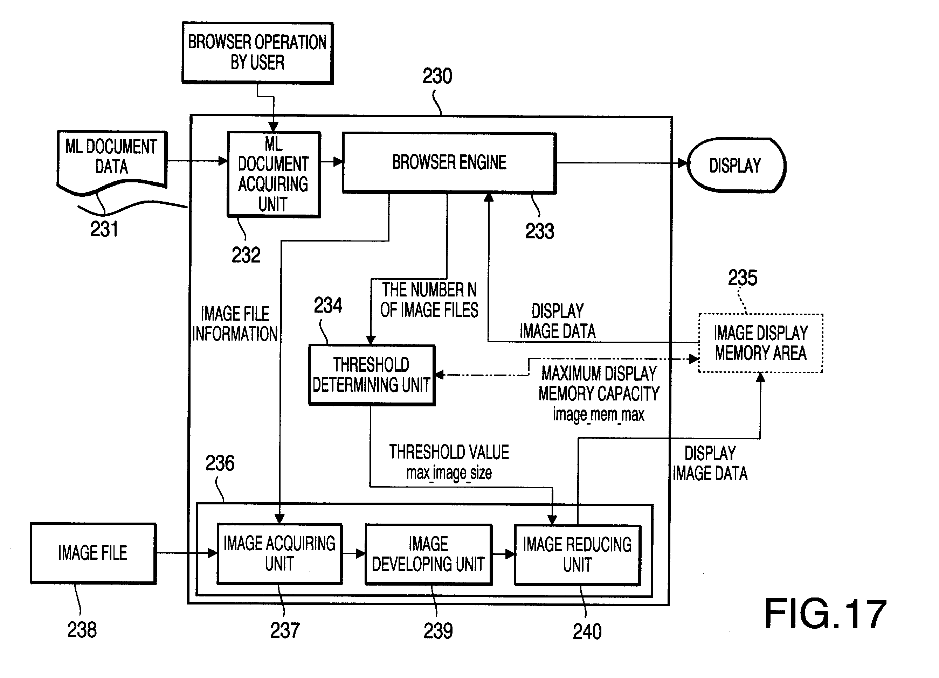

In the cellular phone terminal 210 configured as above, a browser 23 0 (shown in Fig. 17) stored in the ROM 221 is activated when a prescribed operation is performed by the user via the input interface unit 225. With the activation of the browser 230, the cellular phone terminal 210 is connected to a communication network via the wireless communication control unit 224 and the browsing of Web pages becomes possible. Fig. 17 is a functional block diagram showing functions of the browser 230 operating under the control of the CPU 220. The browser 230 in accordance with the fifth embodiment will be explained below referring to Fig. 17.

When a URI is inputted by the user or a URI anchor in a currently displayed page (A display made by the browser 230 by interpreting a markup language document and laying out display objects such as texts and images will hereinafter be referred to as a "page".) is selected by the user, an ML document acquiring unit 232 acquires an ML document 231 of a page of the URI specified by the user via the network. Or when an ML document stored in a local area (e.g. the flash memory 223) is specified by the user, the ML document acquiring unit 232 reads out the specified ML document 231 from the local area.

The ML document 231 acquired as above is handed over to a browser engine 233. The browser engine 233 analyzes the logical structure of the ML document 231, generates a document tree regarding the structure of the ML document, and generates a layout tree, including information on expressive forms (block, inline, table, list, item, etc.) specified by tags, based on the document tree. The layout tree represents the order of arrangement of blocks, inlines, tables, etc. in the document. Incidentally, the layout tree does not include detailed information on the layout, such as the position, the width and the height of each of the elements on the screen, the position of a line feed in a character string, etc. Subsequently, the browser engine 233 sets the layout based on the layout tree and by use of information on the actual display screen such as the display screen width of the liquid crystal display 12. Specifically, the browser engine 233 successively places the elements of the layout tree on the actual display screen and determines the line feed positions of character strings and the position, width and height of each element on the screen. By the above process, display objects such as texts and images specified in the ML document 231 as the display objects are displayed on the display screen of the liquid crystal display 212 of the cellular phone terminal 210.

Meanwhile, the browser engine 233 counts the total number N of images specified in the ML document 231 as the display obj ects and hands over the number N to a threshold determining unit 234. Incidentally, "specifying an image as a display object" means specifying the name or location of the image to be displayed (like <img src"IMAGE FILE NAME"> or <img src="http://PATH NAME/IMAGE FILE NAME">) by use of the "src" attribute in an image tag <img> in the case where the ML document 231 is described in the HTML format, for example.

The threshold determining unit 234 determines the threshold value "max_image_size" of an image display area based on the maximum memory capacity "image_mem_max" of a memory area (hereinafter referred to as an "image display memory area 235") reserved in the RAM 222 for the image development (hereinafter referred to as a "maximum display memory capacity"). The method of determining the threshold value will be explained later.

Meanwhile, the browser engine 233 hands over image file information, such as the name and location of each image file specified in the ML document 231, to an image processing unit 236. In the image processing unit 236, an image acquiring unit 237 acquires an image file 238 based on the image attribute information. An image developing unit 239 expands the acquired image file 238 by use of an image decoder suitable for the type (format) of the image file and temporarily develops the expanded image data in a temporary memory area (unshown) of the RAM 222.

Subsequently, an image reducing unit 40 reduces the size of the image data as needed so that the image data can fit in the threshold value "max_image_size" as will be explained later and develops the image data in the image display memory area 235. Image data that does not need the reduction (i.e. image data originally fitting in the threshold value) is directly developed in the image display memory area 235. The image data in the image display memory area 235 (hereinafter referred to as "display image data") is handed over to the browser engine 233. The browser engine 233 displays text data and the display image data of the display objects on the display screen of the liquid crystal display 212 according to the result of the interpretation of the ML document 231.

Incidentally, while the image file is once developed by the image developing unit 239 and thereafter reduced by the image reducing unit 240 in this embodiment, the development and the reduction may also be executed at the same time by developing the image file so that the display size of the image file will fit in the threshold value. In short, the image developing unit 239 may function also as the image reducing unit 240.

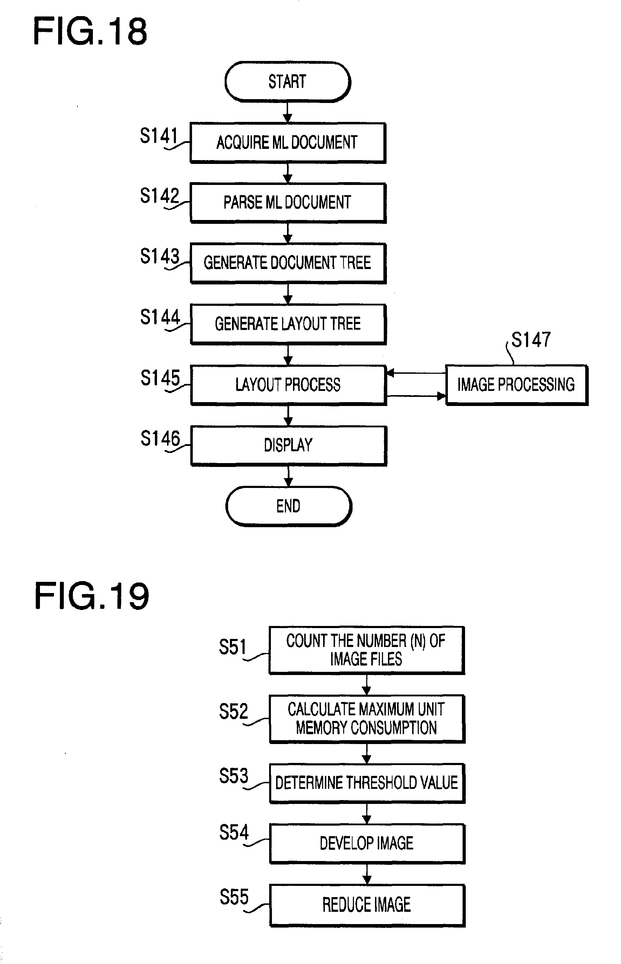

Next, a method of displaying the ML document employed in this embodiment will be explained. As shown in Fig. 18, the browser 230 loads the ML document (S141), parses the ML document (S142), and generates the document tree (S143) as explained above. Subsequently, the browser 230 generates the layout tree based on the document tree (S144). Finally, the browser 230 executes a layout process based on the layout tree (S145) and thereby displays the display objects (texts, images, etc.) specified in the ML document (S146).

In the above flow of the ML document displaying process, the following image processing (S147) is executed. Fig. 19 is a flow chart showing the image processing. The browser engine 233 counts the number N of images specified by image tags in the ML document at proper timing after the acquisition of the ML document (S51). The browser engine 233 hands over data representing the number N of images to the threshold determining unit 234. The threshold determining unit 234 divides the maximum display memory capacity "image_mem_max" of the development memory area by the number N of images according to the following expression (1) and thereby obtains a maximum memory consumption per image (hereinafter referred to as a "maximum unit memory consumption") "image_mem_per" (S52).

$$(\text{image\_mem\_per}) = (\text{image\_mem\_max}) / N \cdots (1)$$

In this example, the maximum display memory capacity "image_mem_max" is a fixed value that can be set arbitrarily (e.g. 500 KB).

Next, the threshold determining unit 234 determines the threshold value "max_image_size" of the image display area that corresponds to the maximum unit memory consumption "image_mem_per" (S53). While the threshold value of the image size can be expressed by width (w) x height (h) (pixels), for example, any value can be used as the threshold value. More specifically, the threshold determining unit 234 calculates the maximum number of pixels by dividing the maximum unit memory consumption by a memory consumption per pixel (pixel_mem_per) and rounding off the quotient, and determines an image size whose number of pixels is nearest to the maximum number of pixels by use of a prescribed algorithm.

Subsequently, the image acquiring unit 237 loads the image file 238 and the image developing unit 239 develops the loaded image file 238 in the temporary memory area of the RAM 222 by use of an image decoder suitable for the type (format) of the image file (S54). When there are a plurality of image files, it is desirable that the image developing unit 239 operate a plurality of image decoders in parallel for simultaneous development of the plurality of image files.

Next, the image reducing unit 240 reduces the size of the developed image data to fit the image data in the threshold value (max_image_size) of the display area when the developed image data exceeds the threshold value (S55). The display image data which have been developed and reduced as above are successively stored in the image display memory area 235.

By the ML document displaying process described above, every image embedded in the ML document is displayed to fit in the threshold value (max_image_size) of the display area. Therefore, actual memory capacity consumed for displaying one image can be saved so as not to exceed the maximum unit memory consumption, by which actual memory capacity necessary for displaying all the images can constantly be kept within the maximum display memory capacity of the image display memory. Consequently, all the images included in the ML document can be displayed without fail irrespective of the size of the ML document, the number of images and the size of each image. Specifically, when the number N of images is small, each image can be displayed in a relatively large size. When the number N of images is large, all the images are displayed without fail even though the image size becomes smaller.

In the following, several modifications of the above fifth embodiment will be described. In the following description of each modification, only a characteristic part of the modification compared to the above fifth embodiment will be explained. Each modification corresponds to a partial modification of the configuration of the cellular phone terminal 210 of the fifth embodiment, and thus the figures and reference characters which have been referred to in the explanation of the fifth embodiment will also be used similarly in the explanation of the following modifications.

(Modification #1)

While the maximum image memory capacity (image_mem_max) is a fixed value which is set arbitrarily in the above fifth embodiment, the maximum image memory capacity (image_mem_max) may also be set dynamically for each page. For example, from the memory area in the RAM 222 assigned to the browser 230, memory capacity of a remaining memory area other than memory areas used for the storing, processing (e.g. image decoding), etc. of the ML document itself and objects other than images (JavaScript, sound, etc.) (i.e. used for purposes different from image display) may be dynamically assigned as the maximum image memory capacity (image_mem_max). By such a configuration, the images specified in the ML document can be displayed without fail while displaying each image with the largest threshold value (max_image_size) by use of the remaining memory area. Specifically, even when the memory does not have large free space in reserve, the display of all the images specified in the ML document is guaranteed by displaying each image in a small size, while each image can be displayed in a large size when the memory has large free space in reserve. The maximum image memory capacity becomes larger and each image displayed also becomes larger as text data of display objects included in the ML document gets smaller and the number of objects other than images gets smaller. On the other hand, when the text data gets larger and the number of objects other than images gets larger, the maximum image memory capacity becomes smaller, but all the images are displayed without fail even though each image displayed becomes smaller.

In this case, when a plurality of image decoders are run in parallel by the image developing unit 239 as mentioned above, the size of each image displayed can be increased by enlarging the remaining memory area by restricting the number of the image decoders operating in parallel.

(Modification #2)

While all the image files embedded in the ML document are handled as the objects of the counting in the fifth embodiment and the modification #1, it is possible to make exceptions under certain conditions and cancel the display of exceptional images (e.g. an image that is specified in the image tag as an exception by use of a special attribute). Even in this case, all the images that should be browsed by the user (viewer) can be displayed without fail in spite of the restricted memory capacity.

(Modification #3)

The number N of images counted may be restricted by a particular upper limit. For example, by simply setting a maximum number N_max for the number of images, in case where the number of images specified in the ML document as display objects exceeds the maximum number N_max, the number N of images can be uniformly fixed at N_max. With this configuration, each image is prevented from becoming too small for recognition due to a too small threshold value.

(Modification #4)

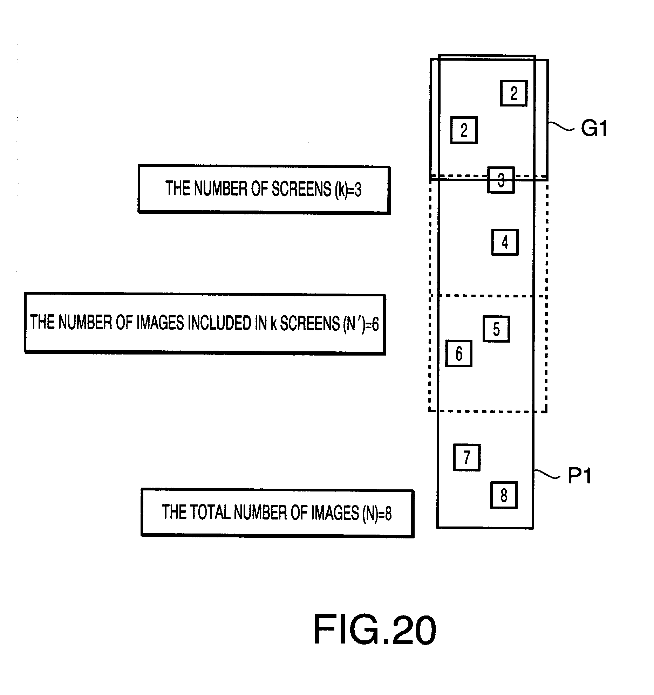

The counting of the number of images may also be performed not for a whole page but for a limited part of a page. For example, as shown in Fig. 20, it is possible to count the number N' of images arranged within a prescribed number of screens k (e.g. 3) from the front end of the ML document. In this case, all the images arranged within the prescribed number of screens can be displayed without fail even though it is impossible to guarantee the display of all the images embedded in the ML document. In Fig. 20, the reference character "G1" represents the size of one screen and the reference character "P1" represents the whole page.

(Modification #5)

The browser 230 may also be configured to successively start the interpretation of each part of the ML document that has been loaded, successively acquire and develop image files specified as display objects, and successively display the developed image files on the screen, instead of starting the display after completely loading the whole ML document. In this case, at the point when the display is started, it is impossible to judge how many images have been specified in the ML document as display objects. Thus, in this modification, the browser engine 233 counts the number n1 of images specified as display objects so far at a particular point in time after the start of the loading (e.g. when k screens of ML document has been loaded), divides the capacity of a part (e.g. 50 %) of the image display memory area 235 by the number n1, and thereby obtains the maximum unit memory consumption per image up to this point. Subsequently, a threshold value of the image display area (hereinafter referred to as a "first threshold value") that corresponds to the maximum unit memory consumption is determined. Thereafter, each image is developed and displayed so as to fit in the calculated first threshold value.

Thereafter, when the loading of the ML document has been completed and the total number N of images specified in the ML document as display objects has become clear, the number n2 of images that have not been displayed yet is determined, and the maximum unit memory consumption for each of the remaining images is calculated by dividing the capacity of the remaining part (e.g. 50 %) of the image display memory area 235 by the number n2.

Subsequently, a threshold value of the image display area (hereinafter referred to as a "second threshold value") that corresponds to the maximum unit memory consumption is determined. Thereafter, each of the remaining images is developed and displayed so as to fit in the calculated second threshold value.

Consequently, the display of the ML document and images can be started without waiting for the completion of the loading of the whole ML document, while guaranteeing all the images included in the whole ML document to be developed and displayed within the capacity of the assigned image development memory area.

While the threshold value is changed in two stages in this modification #5, a configuration changing the threshold value in more stages is also possible. The change of the threshold value may be repeated until the processing of the whole ML document is finished. Specifically, the threshold value may be determined at prescribed intervals (each time the loading of k screens of ML document is finished, at prescribed time intervals, etc.) so as to necessarily leave 50 %, for example, of the remaining part of the image display memory area 35 at that point. With this configuration, the display of the texts and images can be made successively without waiting for the completion of the loading of the whole ML document, while guaranteeing all the images included in the whole ML document to be developed and displayed without exceeding the capacity of the assigned image display memory area 35 by gradually decreasing the threshold value until the whole ML document is processed.

(Modification #6)

While one threshold value is determined generically for all the images in the above modifications #1 - #5, it is possible to determine different threshold values respectively for the images. For example, for each image (each of one or more images specified in the ML document as display objects), the ratio of the display size (width x height) of the image

(specified in an image tag) to the sum of the display sizes of all the images is calculated, the maximum unit memory consumption "image_mem_per" to be assigned to the image in the image display memory area is determined based on the calculated ratio, and a threshold value "max_image_size" of the display area that corresponds to the determined maximum unit memory consumption is determined.

A threshold value determination process employed in this modification will be explained below.

(1) Simultaneously with the transfer of the image file information (specified by an image tag) from the browser engine 233 to the image acquiring unit 237, display size information on the image (specified by the image tag) is supplied to the threshold determining unit 234. The threshold determining unit 234 calculates the display area of the image based on the display size information (specified like "width=180 height=120", for example), and stores the calculated display area in an unshown temporary memory area of the RAM 222 while associating it with the image. On the other hand, when display size information on the image has not been specified in the image tag, the threshold determining unit 234 assigns a prescribed display area to the image and stores the assigned display area in the temporary memory area of the RAM 222 in a similar manner.

(2) When the display area has been determined for every image tag specified in the ML document and the determined areas have been stored by the repetition of the above procedure, the sum of the display areas of all the images is calculated.

(3) Subsequently, the ratio (%) of the stored display area of each image to the sum of the display areas is calculated. The maximum unit memory consumption "image_mem_per" for each image (as a part of the maximum display memory capacity) is determined by use of the ratio (%).

In other words, the memory consumption for each object image can be calculated according to the following expressions (2) and (3):

(4) A threshold value of the display area that corresponds to the maximum unit memory consumption for each object image determined as above is determined and handed over to the image reducing unit 240.

The image reducing unit 240 reduces each image as needed so that the image fits in the determined threshold value, similarly to the step S55 of Fig. 19 explained in the above fifth embodiment.

Consequently, all the images included in the ML document can be displayed without fail irrespective of the size of text included in the ML document, the number of images and the size of each image. Further, each image can be displayed on the display screen while incorporating the difference in the display size among the images which has been intended by the creator of the ML document. In short, the intention of the creator, specifying different display sizes for the images for some reason, can be incorporated into the display.

(Modification #7)

In the above fifth embodiment and modifications #1 - #6, the threshold value may become too small and each image may become hard to view depending on the number of images specified in the ML document as display objects and the size of the text in the ML document. Therefore, it is desirable to make the enlarged display (enlarging an image selected by the viewer to a size exceeding the threshold value). The size of the enlarged image is desired to be larger than the threshold value and smaller than the display. Further, it is especially desirable to display the enlarged image while overlaying it on the position of the selected image in the displayed page.

The fifth embodiment and the modifications #1 - #7 which have been described above, each of which is made up of a combination of various features, are not to be restricted by the particular illustrative description. Omission of part of the features or replacement of part of the features with other functions is possible without departing from the scope and spirit of the present invention. For example, while the above explanation has been given assuming that each "image specified in the ML document as a display object" is an image specified by an image tag <img> and the number N of images is counted by counting such images as image units, the image unit is not necessarily restricted to the object specified by each image tag <img>. As already mentioned referring to Figs. 8 and 9, an image made up of a plurality of images (specified by image tags <img>) combined together (referred to as a "combined image") can also be handled as one image unit.

The content shown in Fig. 8 is handled as one image unit as an object of the counting of the number of image files (N) in the step S51 of Fig. 19 when the content is judged by the formatter to be a combination of images (S144 in Fig. 18). As above, by this embodiment, when a table is a combination of images, the whole combined image is displayed in the reduced display, by which the content can be browsed on the terminal device 210 while maintaining its original information. Such images as display units of the display objects can include image maps.

As described above, by the fifth embodiment, a markup language document displaying method, capable of letting the user (viewer) browse all the images intended by the creator, can be provided. Since the image enlargement is executed adaptively depending on the memory size, the visibility (i.e. convenience for the user) in the content browsing on a terminal device can be enhanced while preventing an unnecessary increase in the processing load.

**Claims**

1. A displaying method for displaying content on a terminal device, comprising the steps of:

   judging whether an object in the content displayed on a display screen of the terminal device is in a state partially displayed within the display screen or not; and
   displaying the whole of the object while overlaying it on the currently displayed content when the object is in the state partially displayed within the display screen.

2. The displaying method according to claim 1, wherein the display of the whole object is made so that the whole object is exactly fitted in screen width of the display screen.

3. A browser program for displaying content on a terminal device, letting a computer implement the following functions:

   a function of judging whether an object in the content displayed on a display screen of the terminal device is in a state partially displayed within the display screen or not; and
   a function of displaying the whole of the object while overlaying it on the currently displayed content when the object is in the state partially displayed within the display screen.

4. A displaying method for displaying content on a terminal device, comprising the steps of:

   judging whether or not data as a processing object is an image as a component of image data in a prescribed format, configured so that one or more operations can be specified for each image while associating them with coordinates, that has been associated with one of the operations;
   judging, when the processing object data is judged to be an image as a component of the image data in the prescribed format, whether the image as a component is in a state partially displayed within a display screen of the terminal device or not; and
   displaying the whole of the image as a component while overlaying it on the currently displayed content when the image as a component is in the state partially displayed within the display screen.

5. The displaying method according to claim 4, wherein the display of the whole of the image as a component is made so that the whole image is exactly fitted in screen width of the display screen.

6. A browser program for displaying content on a terminal device, letting a computer implement the following functions:

   a function of judging whether or not data as a processing object is an image as a component of an image map;
   a function of judging, when the processing object data is judged to be an image as a component of the image map, whether the image as a component is in a state partially displayed within a display screen of the terminal device or not; and
   a function of displaying the whole of the image as a component while overlaying it on the currently displayed content when the image as a component is in the state partially displayed within the display screen.

10

CPU 3

5 ROM | 11 DISPLAY DRIVER | 13 DISPLAY

7 RAM | 19

9 NETWORK INTERFACE | 15 USER INTERFACE DEVICE I/F | 17 USER INTERFACE DEVICE

# FIG. 1

21 HTML DOCUMENT → 31 PARSER → 23 DOCUMENT TREE → 32 PAGE MAKER → 25 LAYOUT TREE → 33 FORMATTER

20

IMAGE FILE INFORMATION

35 IMAGE FILE → 34 IMAGE ACQUIRING UNIT → 36 IMAGE DEVELOPING UNIT → 37 IMAGE REDUCING UNIT → 38 DISPLAY IMAGE DATA

33a

# FIG. 2

# FIG. 3

```
    ┌─────────────────────────┐
    │  DYNAMIC ENLARGEMENT    │
    │        PROCESS          │
    └─────────────────────────┘
                │
                ▼
           ╱─────────╲                    S31
        ╱   HAS OBJECT   ╲
     ╱  AT FOCUS POSITION   ╲────── NO ───┐
        ╲  BEEN REDUCED?   ╱              │
           ╲─────────╱                    │
                │                         │
               YES                        │
                ▼                         │
    ┌─────────────────────────┐           │
    │  OBJECT ENLARGED DISPLAY │   S32     │
    │        PROCESS          │           │
    └─────────────────────────┘           │
                │◄────────────────────────┘
                ▼
         ┌────────────┐
         │    END     │
         └────────────┘
```

# FIG. 4

```
    ┌─────────────────────────┐
    │  DYNAMIC ENLARGEMENT    │
    │        PROCESS          │
    └─────────────────────────┘
                │
                ▼
           ╱─────────╲                    S41
        ╱ IMAGE MAP THAT HAS ╲
     ╱     BEEN REDUCED?       ╲── NO ───┐
        ╲                    ╱            │
           ╲─────────╱                    │
                │                         │
               YES                        │
                ▼                         │
    ┌─────────────────────────────┐       │
    │ PARTIAL IMAGE ENLARGED DISPLAY│ S42  │
    │           PROCESS            │       │
    └─────────────────────────────┘       │
                │◄────────────────────────┘
                ▼
         ┌────────────┐
         │    END     │
         └────────────┘
```

# FIG. 5

(a)

51

**Access Systems Eur ...**

NetFront tor Series 60 is a sophisticated Internet browser for smartphones. it provides quick and seamless access to standard Web page from a mobile phone.

Details

Select ▲ Back

(b)

51a

**Access System** | C : Normal |

Downroad NOW
Net From vd1 For Surface 50
E value Don Package 1       OK

sophisticated Internet browser for smartphones. it provides quick and seamless access to standard Web page from a mobile phone.

Details

Save ▲ Back

FIG. 6

# FIG. 7

(a)

Access System   C : Normal

**Mobile Never**

71

Select   ▼   Back

(b)

Access Systems Eur ...

Mobile Never World To Wide   NetFront

71a

Save   Back

# FIG. 8

```
<HTML>
<head>
<base href = "http://www.access.co.jp/newimages/">
</head>

<table cellspacing = 0 cellpadding = 0 border = 0>
<tr>
<td><img src = "a1.gif"><td><img src = "a2.gif"><td><img src = "a3.gif"><td><img src = "a4.gif"><td><img src =
"a5.gif">
<tr>
<td><img src = "b1.gif"><td><img src = "b2.gif"><td><img src = "b3.gif"><td><img src = "b4.gif"><td><img src =
"b5.gif">
<tr>
<td><img src = "c1.gif"><td><img src = "c2.gif"><td><img src = "c3.gif"><td><img src = "c4.gif"><td><img src =
"c5.gif">
</table>

</HTML>
```

EP 2 487 644 A2

# FIG. 9

61    62    63    64    65

# FIG.10

DISPLAY
SCREEN

77

75

CONTENT FOR PCs

T1

AAAA

BBBBB

IMAGE A1

IMAGE B1

A1

B1

77

# FIG.11

## FIG.12

........----AAAA----------- .........
.......................................
.......................................
.......................................

# IMAGE A1

77 ⌐  ...................................
        .....

## FIG.13

START

S71
IS FOCUSED IMAGE
IN STATE PARTIALLY DISPLAYED WITHIN
DISPLAY SCREEN?

NO

YES

DISPLAY WHOLE IMAGE BY
OVERLAYING IT ON CURRENTLY
DISPLAYED CONTENT — S72

END

# FIG.14

```
        START

            ↓

           S81
      FOCUSED IMAGE IS PARTIAL
NO    IMAGE OF IMAGE MAP AND IN STATE
◄──── PARTIALLY DISPLAYED WITHIN
      DISPLAY SCREEN?

            ↓ YES

   DISPLAY WHOLE PARTIAL IMAGE BY
   OVERLAYING IT ON CURRENTLY      S82
   DISPLAYED CONTENT

            ↓

         END
```

# FIG.15

210

CPU ⌐220

221 ROM

LIQUID CRYSTAL DISPLAY ⌐212

ON-HOOK BUTTON ⌐215

222 RAM

OFF-HOOK BUTTON ⌐216

225

223 FLASH MEMORY

INPUT INTERFACE UNIT

DIALING KEYS ⌐214

DIRECTIONAL KEY ⌐213

219

224

226

WIRELESS COMMUNICATION CONTROL UNIT

AUDIO CONTROL UNIT

MICROPHONE ⌐217

SPEAKER ⌐218

# FIG.16

FIG.17

# FIG.18

```
              ( START )
                 │
                 ▼
S141 ─┤   ACQUIRE ML DOCUMENT   │
                 │
                 ▼
S142 ─┤    PARSE ML DOCUMENT    │
                 │
                 ▼
S143 ─┤ GENERATE DOCUMENT TREE  │
                 │
                 ▼
S144 ─┤  GENERATE LAYOUT TREE   │
                 │
                 ▼                          ┌S147
S145 ─┤    LAYOUT PROCESS    │◄────►│ IMAGE PROCESSING │
                 │
                 ▼
S146 ─┤       DISPLAY         │
                 │
                 ▼
              (  END  )
```

# FIG.19

```
S51 ─┤ COUNT THE NUMBER (N) OF
              IMAGE FILES       │
                 │
                 ▼
S52 ─┤ CALCULATE MAXIMUM UNIT
            MEMORY CONSUMPTION   │
                 │
                 ▼
S53 ─┤ DETERMINE THRESHOLD VALUE │
                 │
                 ▼
S54 ─┤      DEVELOP IMAGE        │
                 │
                 ▼
S55 ─┤      REDUCE IMAGE         │
```

THE NUMBER OF SCREENS (k)=3

THE NUMBER OF IMAGES INCLUDED IN k SCREENS (N′)=6

THE TOTAL NUMBER OF IMAGES (N)=8

~ G1

~ P1

2

2

3

4

5

6

7

8

# FIG.20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6590583 B2
- JP 2987355 B